# EUROPEAN PATENT APPLICATION

(11) **EP 4 390 774 A1**
(43) Date of publication of application: **26.06.2024**
(21) Application number: 22306983.2
(22) Date of filing: 21.12.2022
(51) Int. Cl.: G06N 3/0895, G06N 3/0455, G06T 9/00, H04N 19/463

(54) **METHOD AND DEVICE FOR DECODING A BITSTREAM**

(71) Applicant: Fondation B-COM, 35510 Cesson-Sévigné (FR); Orange, 92130 Issy-les-Moulineaux (FR)
(72) Inventor: HENRY, Félix, 35760 Saint-Gregoire (FR); CLARE, Gordon, 35740 Pace (FR); ABDOLI, Mohsen, 35235 Thorigne-Fouillard (FR)
(74) Representative: Cabinet Beau de Loménie

(57) **Abstract**

The invention concerns a method for decoding a bitstream comprising, at a decoding device: obtaining (S33) a decoded neural network from at least one group of a plurality of compressed neural networks, the compressed neural networks of the at least one group being available to the decoding device; and, decoding (S34) the bitstream with the obtained neural network.

## Description

### Field of the disclosure

The present invention generally relates to the field of media data encoding and decoding using neural networks. It relates more specifically to a method for decoding a bitstream. The invention also relates to a decoding device, and a bitstream.

In general, the invention can find an application in any industrial and technical field where encoding and/or decoding of media data have to be carried out.

### Description of the Related Art

In recent years, the rising demand for media streaming has led to significant progress in compression, and particularly in video compression. The aim of compression algorithms is to reduce the amount of data required for media streaming or storage, while keeping an acceptable visual/audio quality.

Recently, neural network-based encoders and decoders have been introduced for encoding and decoding media data that improve performances. To that end, data representative of a media data content are encoded with an artificial neural network (also named encoding neural network), and the decoding of the encoded data can be implemented by another neural network (also named decoding neural network).

However, current approaches using neural networks for encoding and decoding media data typically require prior transmission of a substantial amount of data between the encoding device and the decoding device to allow this decoding device to correctly configure a neural network to use for decoding the media data.

In video compression, some approaches even require the transmission of a different decoding neural network for decoding each video sequence of a bitstream, which again represents significant amount of data.

There is thus room for improvement in the fields of encoding and decoding using neural networks.

### Summary of the disclosure

To this end, the present invention first provides a method for decoding a bitstream comprising, at a decoding device:
- obtaining a decoded neural network from at least one group of a plurality of compressed neural networks, the compressed neural networks of the at least one group being available to the decoding device; and,
- decoding the bitstream with the obtained neural network.

As further detailed in the following, the compressed neural networks of the group are "available to" the decoding device in that the compressed neural networks are stored within a memory of the decoding device or available to the decoding device by downloading.

This method offers the advantage of providing a decoding device adapted to generate a media content encoded with a good performance in term of compression or in term of quality, and this, over a broad range of types of media content, while limiting the amount of data available to that decoding device.

The grouping of neural networks into "groups" speed up the search of an adapted neural network, but also the generation of an adapted decoding neural network, and the decoding of the bitstream. Furthermore, the group of neural networks can be designed so that an efficient encoding and decoding network is available for a variety of content, thus ensuring that excellent compression performance can be achieved in all cases.

In some implementations, the compressed neural networks of the at least one group are adapted to decode media data bitstreams with a same type of content.

This media data corresponds, for example, to audio data, video data, and/or still images.

The invention is particularly suitable for decoding medical images, such as magnetic resonance images, or medical video sequences, such as cardiac sequences of images that are for example used in order to detect irregular beats of a patient. As a matter of fact, medical images get specific image statistics which can be efficiently processed with neural network encoders/decoders (e.g., by only adapting the weight values).

Furthermore, medical images regularly typically 3D or even 4D (3D+time) content. The use of a neural network encoder/decoder to process such images is particularly advantageous since its architecture is relatively similar to the one of a neural network encoder/decoder adapted to process images with a lower dimension (e.g., 2D images).

In some implementations, obtaining a decoded neural network comprises decoding a compressed neural network of the at least one group, and the compressed neural network is decodable in reference to a reference neural network.

In some implementations, the compressed neural network is decodable in reference to a reference neural network using decoding differential data.

The feature according to which the compressed neural network is decodable in reference to a reference neural network offers the advantage of limiting the amount of data to process, since only differential data with respect to the reference neural network is encoded and/or decoded.

In some implementations, the reference neural network belongs to the at least one group.

In some implementations, decoding a compressed neural network of the at least one group comprises:
- applying a neural network decoder on the reference neural network to obtain a decoded reference neural network; and,
- applying an incremental neural network decoder taking the decoded reference neural network and decoding differential data associated to the compressed neural network as inputs, so as to obtain the decoded neural network.

In some implementations, the reference neural network does not belong to the at least one group.

In that case, this reference decoding neural network may be considered as a default reference decoding neural.

In some implementations, obtaining a decoded neural network comprises independently decoding a compressed neural network by applying, on the compressed network, a neural network decoder compliant with the Neural Network Compression and Representation Standard.

This Neural Network Compression and Representation Standard can for example correspond to Part 17 of ISO/IEC 15938.

In the following, the term "independently encoding" or "independently decoding" refers to the fact that a neural network is encoded or decoded without accessing another neural network (or more generally without accessing data related to another network).

In some implementations, the bitstream comprises data for signaling whether the bitstream should be decoded by a decoding device adapted to obtain a decoded neural network from at least one group of compressed neural networks.

In some implementations, the bitstream comprises data signaling predetermined characteristics of at least one group of compressed neural networks adapted to decode the bitstream.

In some implementations, the data signaling predetermined characteristics of a group of compressed neural networks is indicative of:
- a type of group comprising decoding neural networks adapted to a specific type of content, such as sport, synthetic images, medical images, ...
- a type of group characterized by a maximal level of incremental decoding of its neural decoders. For instance, the data BT indicates that at most two decoding neural networks need to be decompressed before a given requested decoding neural network identified by the flag I (described hereafter) can be decompressed;
- a type of group characterized by the fact that a certain decoding method is required to decompress the compressed decoding neural networks (for instance, NNR decoding, or ONNX decoding, according to those respective formats);
- a type of group characterized by the fact that all decoding neural networks of the group can be decoded independently from one another; and/or
- a type of group characterized by the fact that decoding at least one of the neural decoders may require to access a neural network that is not in the group.

In some implementations, the bitstream comprises data for identifying the at least one group of compressed neural networks.

In a particular implementation, the data for identifying the at least one group takes the form of a flag or an indicator.

In some implementations, the bitstream comprises coded video sequences, and the bitstream further comprises data for identifying a compressed neural network to use for decoding a current video sequence, among the compressed neural networks of the at the least one group.

In some implementations, the bitstream further comprises data for identifying a compressed neural network to use for decoding a next video sequence following the current video sequence, among the compressed neural networks of the at the least one group.

This feature is particularly advantageous since it allows informing beforehand the decoding device, so that this decoding device can initiate generation of a neural network decoder to be used for decoding the next video sequence upon receiving that set of parameters, and without waiting for reception of that next video sequence.

In some implementations, the bitstream comprises data for signaling that the bitstream further comprises refinement data that can be used for obtaining the decoded neural network.

In some implementations, the decoding method further comprises determining whether the bitstream should be decoded by a decoding device adapted to obtain a decoded neural network from at least one group of compressed neural networks, based on the data for signaling whether the bitstream should be decoded or not by a decoding device adapted to obtain a decoded neural network from at least one group of compressed neural networks.

In some implementations, the decoding method further comprises determining whether the decoding device is adapted or not to access at least one group of compressed neural networks having predetermined requirements, based on the data signaling predetermined characteristics of a group of compressed neural networks adapted to decode the bitstream.

In some implementations, the decoding method further comprises determining whether a neural network adapted to decode the current sequence of the bitstream can be obtained or not by the decoding device, based on the data for identifying a compressed neural network to use for decoding the current video sequence.

According to a second aspect, the present invention concerns a decoding device comprising at least one processor and a memory having stored thereon a program for implementing the method for decoding a bitstream according to the invention.

Embodiments of the present invention also extend to programs which, when run on a computer or processor, cause the computer or processor to carry out the methods described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

According to a third aspect, the present invention concerns a bitstream comprising at least one of:
- data for signaling whether the bitstream should be decoded by a decoding device adapted to obtain a decoded neural network from at least one group of compressed neural networks;
- data signaling predetermined characteristics of a group of compressed neural networks adapted to decode the bitstream;
- data for identifying at least one group of compressed neural networks; and,
- data for identifying a compressed neural network to use for decoding the current video sequence, among the compressed neural networks of the at the least one group.

According to a fourth aspect, the present invention concerns a method for encoding media data comprising, at an encoding device:
- selecting at least one group of encoding neural networks adapted for coding the media data by applying a neural network trained to determine the best group of encoding neural networks according to a predetermined criterion; and,
- encoding the media data with an encoding neural network of the selected group.

This method offers the advantage of providing an encoding device that speeds up the search of an adapted neural network among a plurality of groups of encoding neural networks configured to process a broad range of types of media content. The group of encoding neural networks is selected according to a predetermined criterion that can correspond to a criterion performance in term of compression or in term of quality.

This media data can correspond to audio data, video data, and/or still images.

In some implementations, the encoding method further comprises selecting an encoding neural network of the selected at least one group by applying a neural network trained to identify an encoding neural network of the group that satisfies a predetermined criterion.

In some implementations, the encoding method further comprises selecting an encoding neural network of the selected at least one group by:
- encoding the media data with several encoding neural networks of the at least one group; and,
- selecting an encoding neural network of the at least one group that satisfies a predetermined criteria.

According to a fifth aspect, the present invention concerns a method for decoding a bitstream comprising, at a decoding device:
- obtaining data related to at least one group of a plurality of neural networks;
- obtaining a decoded neural network from the obtained data, the neural networks of the at least one group being available to the decoding device; and,
- decoding the bitstream with the obtained neural network.

In some implementations, the bitstream comprises data for identifying the at least one group of neural networks.

In some implementations, the neural networks of the at least one group available to the decoding device are compressed neural networks.

In some implementations, the neural networks of the at least one group are adapted to decode video bitstreams with a same type of content.

In some implementations, obtaining a decoded neural network comprises decoding a compressed neural network of the at least one group, and the compressed neural network is decodable in reference to a reference neural network using decoding differential data.

In some implementations, the bitstream comprises data for signaling whether the bitstream should be decoded by a decoding device adapted to obtain a neural network from at least one group of neural networks.

In some implementations, the bitstream comprises data signaling predetermined characteristics of a group of neural networks adapted to decode the bitstream.

In some implementations, the bitstream comprises coded video sequences, and the bitstream further comprises data for identifying a neural network to use for decoding a current video sequence, among the neural networks of the at the least one group.

In some implementations, the bitstream further comprises data for identifying a neural network to use for decoding a next video sequence following the current video sequence, among the neural networks of the at the least one group.

In some implementations, the bitstream comprises data for signaling that the bitstream further comprises refinement data that can be used for obtaining the decoded neural network.

In some implementations, the decoding method of the fifth aspect further comprises determining whether the bitstream should be decoded by a decoding device adapted to obtain a neural network from at least one group of neural networks, based on the data for signaling whether the bitstream should be decoded or not by a decoding device adapted to obtain a neural network from at least one group of neural networks.

In some implementations, the decoding method of the fifth aspect further comprises determining whether the decoding device is adapted or not to access at least one group of neural networks having predetermined requirements, based on the data signaling predetermined characteristics of a group of compressed neural networks adapted to decode the bitstream.

In some implementations, the decoding method of the fifth aspect further comprises determining whether a neural network adapted to decode the current sequence of the bitstream can be obtained or not by the decoding device, based on the data for identifying a neural network to use for decoding the current video sequence.

### Brief description of the drawings

Figure 1 illustrates a particular implementation of an encoding device according to the invention;
Figure 2 illustrates an example of the hardware architecture of the encoding device of Figure 1;
Figure 3 illustrates a pair of encoding and decoding neural networks;
Figure 4 illustrates the generation of compressed decoding neural networks to use for decoding a bitstream;
Figure 5 comprises figures 5A, 5B and 5C and illustrates three examples of groups of compressed neural networks that can be stored in a memory of a decoding device;
Figure 6 is a flowchart of steps of a method for encoding media data according to the invention;
Figure 7 depicts, for illustrative purposes, a bitstream generated by the method for encoding media data of Figure 6;
Figure 8 illustrates a particular implementation of a decoding device according to the invention;
Figure 9 illustrates an example of the hardware architecture of the encoding device of Figure 8; and,
Figure 10 is a flowchart of steps of a method for decoding a bitstream according to the invention.

### Detailed description

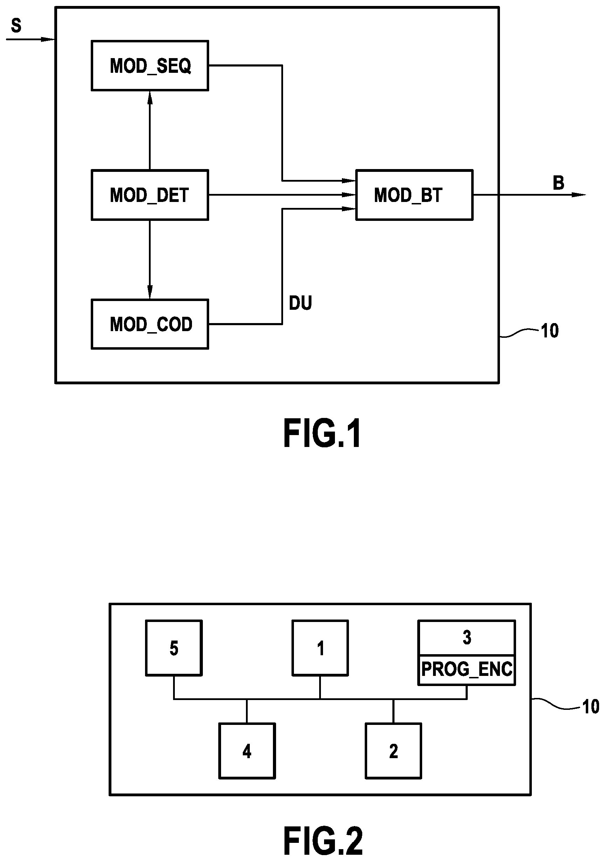

**Figure 1** illustrates a particular implementation of an encoding device 10 according to the invention.

The encoding device 10 comprises a sequence processing module MOD_SEQ, a module MOD_DET for determining neural networks, a coding module MOD_COD, and a module MOD_BT for generating a bitstream.

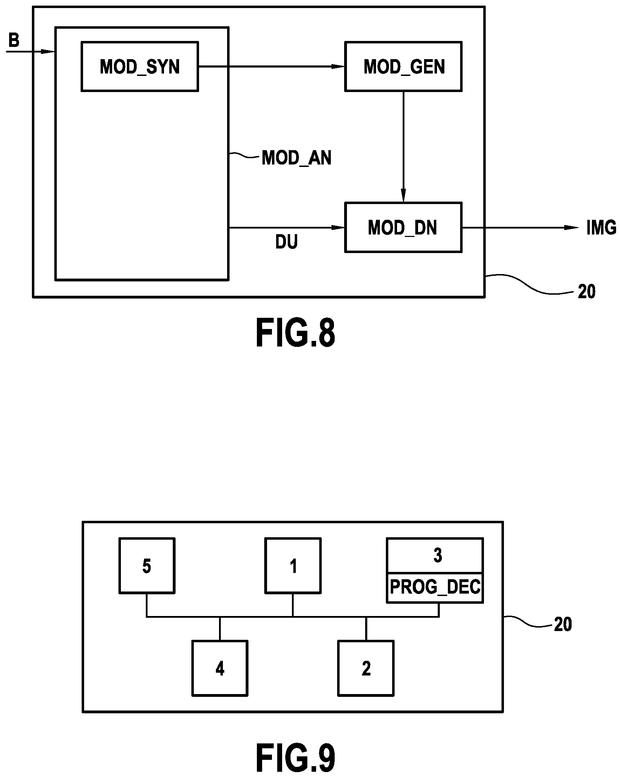

In an example, the encoding device 10 receives in input a time series S of digital images IMG to encode, so as to store them in a non-volatile memory (for a future reading by a decoding device) or to send them (to a decoding device, such as the decoding device 20 described with respect to Figure 8).

Each image received in input is for example represented by a 2D representation, such as a pixel matrix. In practice, each image received in input can be represented by a plurality of 2D representations (or pixel matrices) that respectively correspond to a plurality of signals, such as RGB color signals, or, in a variant, a luma signal and at least one chrominance signal.

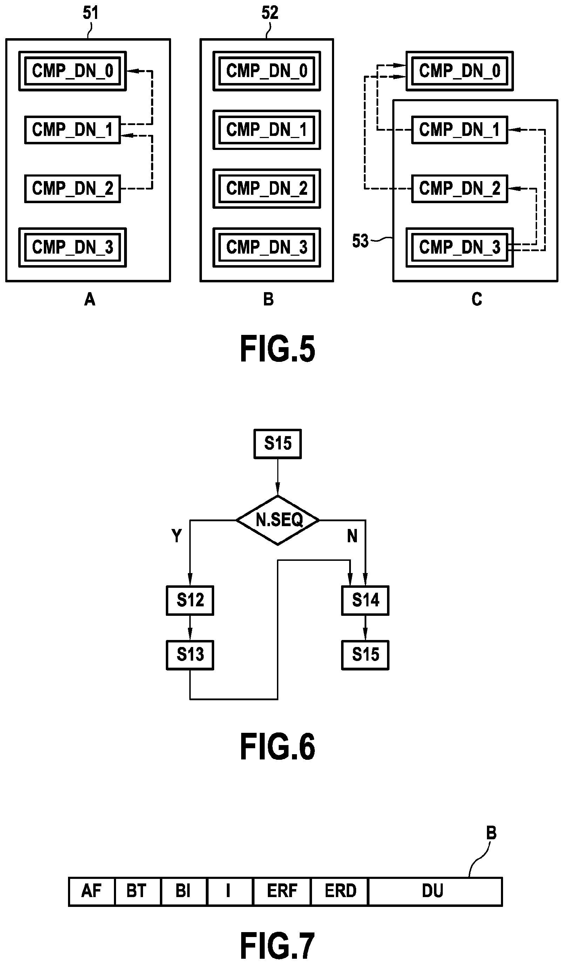

As described with respect to Figure 6, the sequence processing module MOD_SEQ is configured to determine if an image IMG received in input corresponds to a first image of the video sequence, and for determining whether a new current encoding neural network should be selected for encoding the image, and a fortiori the corresponding sequence. The sequence processing module MOD_SEQ is also configured for generating a set of parameters associated to the current sequence.

As described in the following, the encoding device produces in output a plurality of data units DU respectively associated to a plurality of images of the time series. A "video sequence" may be defined as a set of sequential images respectively associated to a plurality of data units DU representative of the different images of the plurality of images. In other words, each image of a video sequence can be decoded on the basis of data units DU associated to images of that video sequence, without referencing other data units associated to images that do not belong to that video sequence.

The module MOD_DET for determining neural networks is configured for determining an encoding neural network for encoding a current video sequence of the time series S. Different ways for implementing this step are described hereafter.

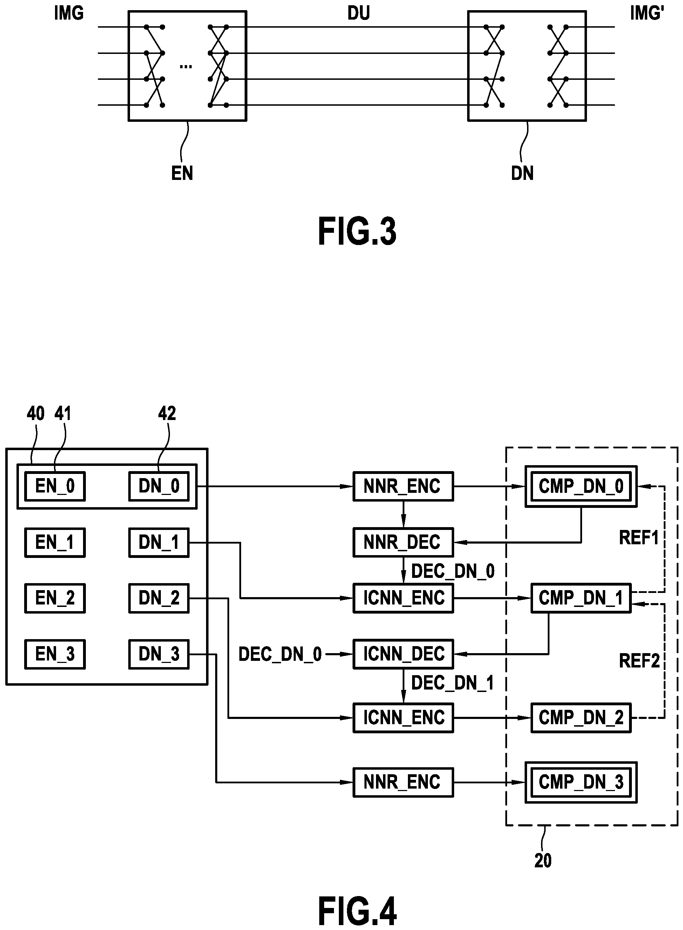

**Figure 3** illustrates a pair of encoding and decoding neural networks. As illustrated by Figure 3, the encoding neural network EN is associated to a decoding neural network DN that can be used for decoding data units DU generated by the encoding neural network EN. The encoding neural network EN and the decoding neural network DN form a pair of artificial neural networks.

Each of the encoding neural network EN and the decoding neural network DN are defined by a structure that can comprise a plurality of layers and/or a plurality of weights respectively associated to the neurons of the concerned neural network.

A representation, for example a 2D representation, of the current image IMG (or in a variant, of a signal or a data block of the current image IMG) is applied in input (e.g., on the input layer) of the encoding neural network EN. The encoding neural network EN then outputs coded data, represented by a data unit DU in Figure 3. In a variant, a video sequence is applied in input of the encoding neural network which produces a data unit DU representative of the whole video sequence.

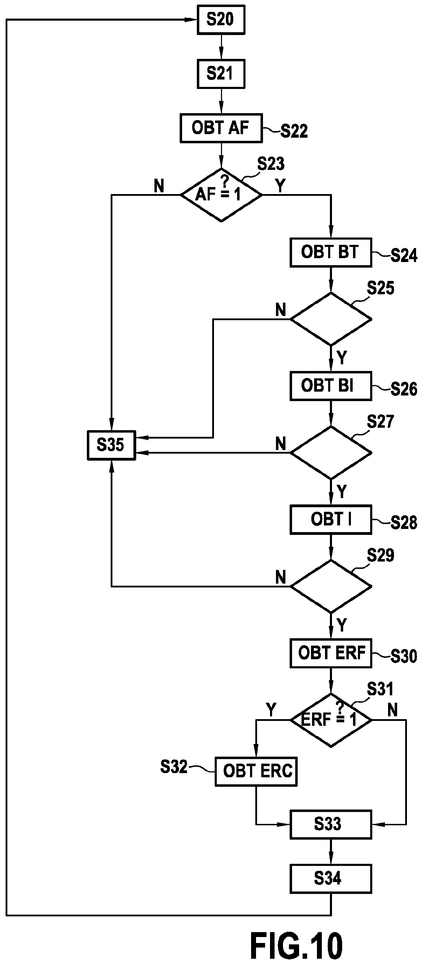

Next, as further described with respect to Figures 8 and 10, the coded data (here the data unit DU) is applied in input of the decoding neural network DN. The decoding neural network DN then outputs a representation IMG' (that may be a 2D representation) that corresponds to a decoded version of the current image IMG (or in a variant, of the signal or of the data block of the current image IMG). In a variant, the decoding neural network produces a video sequence that corresponds to a decoded version of the current video sequence.

The encoding neural network EN is configured so that the data unit DU comprises an amount of data which is inferior to (or in a variant, at least on average on at least a subset of images of the video sequence) the amount of data of the representation of the current image IMG. In other words, the data units DU are typically not only encoded, but compressed.

The encoding neural network and the decoding neural network are previously trained (for example, by applying an important number of images in input of the encoding neural network) so as to minimize the differences between the representation of the image IMG in input, and its representation IMG' in output, but also so as to minimize the amount of data which is transmitted between the encoding neural network EN and the decoding neural network DN.

As further described below, the module MOD_DET for determining neural networks can select an encoding neural network among a plurality of distinct coding neural networks (that respectively belong to several pairs of coding neural networks).

The coding module MOD_COD is configured to encode the representation of the current image IMG (or in a variant, a portion of the current image, or a whole video sequence) into coded data (here into a data unit DU) using the encoding neural network EN determined by the module MOD_DET.

The coding module receives in input the representation (that may be a 2D representation such as a pixel matrix) of the current image IMG, or of a block of the current image IMG, or of a plurality of images IMG.

The module MOD_BT for generating a bitstream B is configured for:
- receiving in input the set of parameters associated to the current video sequence and the data units DU; and,
- generating a bitstream B on the basis of the received data.

In practice, the module MOD_BT for generating a bitstream B can comprise a concatenation unit for aggregating, in a predefined manner, the elements previously listed, and an entropic encoder configured for coding the aggregated data.

The bitstream B can then be transmitted to another electronic device (for example a decoding device 20, such as the decoding device 20 described with respect to Figure 8), or stored within a non-volatile memory (such as a hard drive or the non-volatile memory 4 of the encoding device 10) for a future reading and decoding.

**Figure 2** illustrates an example of the hardware architecture of an encoding device according to the invention.

To this end, the encoding device 10 has the hardware architecture of a computer. As shown in Figure 2, the encoding device 10 comprises a processor 1. Although illustrated as a single processor 1, two or more processors can be used according to particular needs, desires, or particular implementations of the encoding device 10. Generally, the processor 1 executes instructions and manipulates data to perform the operations of the encoding device 10 and any algorithms, methods, functions, processes, flows, and procedures as described in the present disclosure.

The encoding device 10 also comprises communication means 5. Although illustrated as a single communication means 5 in Figure 2, two or more communication means can be used according to particular needs, desires, or particular implementations of the encoding device 10. The communication means are used by the encoding device for communicating with another electronic device. Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated encoding device.

The encoding device 10 also comprises a random access memory 2, a read-only memory 3, and a non-volatile memory 4. The read-only memory 3 of the device constitutes a recording medium conforming to the invention, which is readable by the processor 1 and on which is recorded a computer program PROG_ENC conforming to the invention and containing instructions for carrying out the steps of a method for encoding media data according to the invention.

The program PROG_ENC defines functional modules of the device, which are based on or control the aforementioned elements 1 to 5 of the encoding device, and which comprise in particular:
- the sequence processing module MOD_SEQ;
- the module MOD_DET for determining neural networks;
- the coding module MOD_COD; and,
- the module BT for generating a bitstream B.

**Figure 4** illustrates the generation of compressed decoding neural networks, that can be used by a decoding device (such as the decoding device 20 described with respect to Figure 8) for decoding a bitstream. In an example, this generation is implemented by the encoding device 10 illustrated by Figure 1, and the resulting compressed decoding neural networks are stored within the non-volatile memory 4 of the decoding device 20, or available to the decoding device 20.

As described above, an encoding neural network 41 is associated with a decoding neural network 42, and both form a pair 40 of coding neural networks. In this example, four pairs of coding neural networks {*EN*₀;*DN*₀}; {*EN*₁;*DN*₁}; {*EN*₂;*DN*₂}; {*EN*₃;*DN*₃} are considered. Each of these coding neural networks are "original" neural networks, i.e., they are not compressed and do not result from a decoding of a compressed version of a neural network.

The decoding device of the invention has access to a plurality of compressed decoding neural networks, which are organized into "groups" or "families" of decoding neural networks.

In particular implementations, the decoding neural networks are stored within the non-volatile memory 4 of the decoding device 20 in a compressed state. Storing a compressed version of the decoding neural networks allows reducing the amount of data stored within the decoding device.

Furthermore, and as further described below, a decoding neural network can be independently coded, i.e., without referencing another decoding neural network, or encoded in reference to at least one reference neural network.

In particular implementations, to determine whether a decoding neural network should be encoded in reference another decoding neural network, the encoding device 10 computes a distance representing a similarity between the decoding neural network to encode, and another reference decoding neural network. If the distance is superior to a predetermined threshold (i.e. if the two decoding neural networks are very different), the decoding neural network to encode is not encoded in reference to the concerned reference decoding neural network. In a variant, all combinations between a decoding neural network to encode and candidates for being reference decoding neural networks are tested (i.e., a distance representing a similarity between the decoding neural network to encode and each candidate is computed), and the configuration that allows obtaining the best performance in term of compression or in term of quality is selected.

As further described below, a given decoding neural network can be encoded in reference to several reference decoding neural networks. This is for example the case when a decoding neural network is encoded in reference to a first reference decoding neural network, and when that first reference decoding neural network is itself encoded in reference to a second reference decoding neural network. In that example, the number of levels of incremental coding equals two. However, no limitation is attached to the number of levels of incremental coding that can be used to encode a given decoding neural network.

In particular implementations, when a decoding neural network should be independently encoded, a neural network encoder NNR_ENC compliant with the Neural network Compression and Representation Standard is applied on the concerned decoding neural network. This Neural Network Compression and Representation Standard can correspond to Part 17 of ISO/IEC 15938.

As illustrated by Figure 4, the decoding neural network *DN*₀ is encoded with such a neural network encoder NNR_ENC, so as to generate a compressed version *CMP_DN*₀ of the decoding neural network *DN*₀*.* Similarly, the decoding neural network *DN*₃ is encoded with a neural network decoder NNR_ENC, so as to generate a compressed version *CMP_DN*₃ of the decoding neural network *DN*₃*.* Since both of them are independently encoded, they are represented with double outlines.

In particular implementations, when the decoding neural network should be encoded in reference to a reference decoding neural network, the encoding device is configured to:
- apply a neural network decoder on an encoded version of a reference decoding neural network to obtain a decoded version of the reference decoding neural network; and,
- apply an incremental neural network encoder ICNN_ENC taking as inputs the decoding neural network to encode and the decoded version of the reference decoding neural network, so as to obtain a compressed version of the decoding neural network to encode.

In case several levels of incremental coding are required to obtain a compressed version of the decoding neural network, these steps are re-iterated for each level.

As illustrated by Figure 4, to encode the decoding neural network *DN*₁ in reference to the decoding neural network *DN*₀*,* and since the decoding neural network *DN*₀ has been independently encoded, a neural network decoder NNR_DEC compliant with the Neural network Compression and Representation Standard is applied on the compressed version *CMP_DN*₀ of the decoding neural network *DN*₀*,* so as to obtain a decompressed version *DEC_DN*₀*.* This decompressed version *DEC_DN*₀ and the original decoding neural network *DN*₁ are inputted to an incremental neural network encoder ICNN_ENC, so as to obtain a compressed version *CMP_DN*₁ of the decoding neural network *DN*₁*.*

To encode the decoding neural network *DN*₂ in reference to the decoding neural network *DN*₁*,* and since the decoding neural network *DN*₁ has been encoded in reference to *DN*₀*,* an incremental neural network decoder ICNN_DEC is applied that takes in inputs the compressed version *CMP_DN*₁ of the decoding neural network *DN*₁ and the decompressed version *DEC_DN*₀ of the decoding neural network *DN*₀*,* so as to obtain a decompressed version *DEC_DN*₁*.* This decompressed version *DEC_DN*₁ and the original decoding neural network *DN*₂ are inputted to an incremental neural network encoder ICNN_ENC, so as to obtain a compressed version *CMP_DN*₂ of the decoding neural network *DN*₂*.*

The features (or "metadata") of these compressed decoding neural networks (including the reference REF1 between the compressed version *CMP_DN*₁ of the decoding neural network *DN*₁ and the compressed version *CMP_DN*₀ of the decoding neural network *DN*₀ ; and the reference REF2 between the compressed version *CMP_DN*₂ of the decoding neural network *DN*₂ and the compressed version *CMP_DN*₁ of the decoding neural network *DN*₁) are for example stored within the non-volatile memory 4 of the decoding device 20, or available to the decoding device 20 by downloading.

**Figure 5** comprises figures 5A, 5B and 5C and illustrates three examples of groups of compressed neural networks that can be stored in a memory of a decoding device.

### Groups of pairs of encoding and decoding neural networks

As described above, an encoding neural network *ENᵢ* is associated with a decoding neural network *DNᵢ* and both form a pair (*ENᵢ, DNᵢ*) of coding neural networks. Each pair of coding neural networks is associated to a group (or "family") of coding neural networks. These groups can comprise a plurality of pairs of encoding and decoding neural networks.

Pairs of coding neural networks of a given group are adapted to process images of a given type of content. In other words, when these coding neural networks process (i.e., encode and/or decode) video data of a given type of content, they get a performance in term of compression superior to a predetermined threshold, for example according to a rate-distortion optimization criteria, or according to a value representing the quality of a representation decoded by these decoding neural networks.

In particular implementations, the predetermined threshold is representative of or equal to the best performance of other coding networks that are trained over a variety of contents.

Further details about the rate-distortion optimization criteria can be found in Y. Shoham, A. Gersho, "Efficient Bit Allocation for an Arbitrary Set of Quantizers", IEEE transactions on Acoustics, Speech and Signal Processing, Vol. 36, No. 9, September 1988.

In other words, a group of pairs of coding neural networks is designed so that all coding neural networks of the group are adapted to a particular type of content, e.g., sport, movie, videoconferencing, synthetic content, gaming, and/or medical imaging. In practice, the construction of a given group of coding neural networks may be applied by training a set of pairs of coding neural networks EN, DN using input training images that correspond to a particular type of content, e.g., sport, and each pair of coding neural network may be trained so as to be adapted to a specific sport (e.g., soccer, horse-riding, underwater activities, etc.).

In particular implementations, several groups of coding neural networks are constructed. Some groups may be designed to cover a specific type of content, and some groups may be designed to cover all expected types of contents.

### Groups of compressed decoding neural networks

Similarly to the pairs of encoding and decoding neural networks which are associated to "groups" characterizing a type of media content for which they are particularly well-adapted, the compressed versions of decoding neural networks available to the decoding device are also associated to "groups".

More precisely, let us consider a group G of pairs of encoding and decoding neural networks that is for example particularly well-adapted to process media content of type *T*, then that group *G* of pairs is associated to a corresponding group *G_{CMP}* including the compressed versions of the decoding neural networks of that group *G* of pairs.

In other words, let us consider the case of a pair (EN, DN) of coding neural networks belonging to a group *G,* then the compressed version of the decoding neural network belongs to a group *G_{CMP}* of compressed decoding neural networks, and both groups *G* and *G_{CMP}* are particularly well-adapted for a same type of media content.

**Figure 5A** illustrates a first example of a group of compressed neural networks that can be stored in a memory of a decoding device.

A group 51 of compressed decoding neural networks comprises a compressed version *CMP_DN*₀ of a decoding neural network *DN*₀ (independently encoded), a compressed version *CMP_DN*₁ of a decoding neural network *DN*₁ (encoded in reference to the decoding neural network *DN*₀ - or more precisely encoded in reference to a decompressed version of the decoding neural network *DN*₀ - ), a compressed version *CMP_DN*₂ of a decoding neural network *DN*₂ (encoded in reference to the decoding neural network *DN*₁ - or more precisely encoded in reference to a decompressed version of the decoding neural network *DN*₁ - ), and a compressed version *CMP_DN*₃ of a decoding neural network *DN*₃ (independently encoded).

**Figure 5B** illustrates a second example of a group of compressed neural networks that can be stored in a memory of a decoding device.

A group 52 of compressed decoding neural networks comprises a compressed version *CMP_DN*₀ of a decoding neural network *DN*₀ (independently encoded), a compressed version *CMP_DN*₁ of a decoding neural network *DN*₁ (independently encoded), a compressed version *CMP_DN*₂ of a decoding neural network *DN*₂ (independently encoded), and a compressed version *CMP_DN*₃ of a decoding neural network *DN*₃ (independently encoded).

**Figure 5C** illustrates a third example of a group of compressed neural networks that can be stored in a memory of a decoding device.

A group 53 of compressed decoding neural networks comprises a compressed version *CMP_DN*₁ of a decoding neural network *DN*₁*,* a compressed version *CMP_DN*₂ of a decoding neural network *DN*₂*,* and a compressed version *CMP_DN*₃ of a decoding neural network *DN*₃ encoded in reference to the decoding neural network *DN*₂ and in reference to the decoding neural network *DN*₁*.* The two compressed decoding neural networks *CMP_DN*₁ and *CMP_DN*₂ are encoded in reference to a decoding neural network *DN*₀ that does not belong to the group 53. In practice, this reference decoding neural network may be considered as a default reference decoding neural network be stored within the non-volatile memory 4 of the decoding device, or available to that decoding device by downloading. In that example, the number of levels of incremental coding equals two.

As detailed hereafter, the feature according to which a reference decoding neural network is required that does not belong to a specific group of decoding neural networks can be indicated in the bitstream by a specific signaling.

**Figure 6** is a flowchart of steps of a method for encoding media data, implemented by the encoding device 10.

This method for encoding media data is applied to a time series S of images IMG. This time series S forms a video that should be encoded before being transmitted or stored.

As shown on Figure 6, the method for encoding media data comprises a first step S10 during which the encoding device (here the sequence processing module MOD_SEQ of the encoding device 10) selects the first image of the time series as a "current image".

The method for encoding media data then comprises a step S11 in which the encoding device 10 (here the sequence processing module MOD_SEQ of the encoding device 10) determines whether the current image IMG is chosen as a first image of a video sequence. The criteria considered for this determination can depend on the considered application.

In an example (that may eventually be used when encoding media data intended to be broadcasted on television), the encoding device 10 (here the sequence processing module MOD_SEQ) starts a new video sequence every second. Thus, the maximum period of time required to wait a part of the bitstream related to a new video sequence is of 1 second maximum (which is for example a period of time required when switching between two channels).

In a variant, a new video sequence is started upon detecting a new shot in the video. This new shot can be automatically determined by analyzing the image content of the time series.

In another variant, it may be possible to consider sequences with a longer period of time (for example between 10 and 40 seconds) so as to reduce the bitrate, since the encoding of a first image of an video sequence requires a more important amount of data so as to reconstruct this image solely on the basis of this data, i.e., without accessing data associated to another video sequence.

If it is determined at step S11 that the current image IMG is chosen as a first image of an video sequence (e.g., if the encoding device starts encoding a new video sequence), the method then continues at step S12.

On the contrary, if it is determined at step S11 that the current image IMG is not chosen as a first image of an video sequence (e.g., if the encoding device continues encoding of a current sequence), the method then continues at step S14.

At step S12, the encoding device (here the module MOD_DET for determining neural networks) determines the encoding neural network EN to associate to the current video sequence. The encoding neural network EN thus determined becomes the "current encoding neural network".

In particular implementations, the module MOD_DET for determining neural networks selects the current encoding neural network among a predetermined set of encoding neural networks, for example among a set of encoding neural networks respectively associated to decoding neural networks available to a given decoding device (a previous data transmission between the encoding device and the decoding device being then possible to identify this set of neural networks).

In particular implementations, the module MOD_DET for determining neural networks selects the encoding neural network EN that gets a performance in term of compression which is superior to a predetermined threshold, for example according to a rate-distortion optimization criteria, or according to a value representing the quality of the decoded video sequence. In particular implementations, the predetermined threshold is representative of or equal to the best performance of other coding networks that are trained over a variety of contents.

In particular implementations, the current image IMG is representative of the content of the whole video sequence, and the module MOD_DET for determining neural networks inputs the current image IMG to several encoding neural networks (each being eventually associated to a decoding neural network), and select the encoding neural network EN that allows obtaining the best performance in term of compression or quality, as indicated above.

In a variant, the set of images of the video sequence can be successively applied in input of the different encoding neural networks EN so as to select the encoding neural networks EN that allows obtaining the best performance in term of compression or quality.

In particular implementations, the encoding neural networks that may be selected by the encoding device 10 are grouped into "groups" or "families" (as explained in reference to Figure 5), and the encoding neural networks of a given group are adapted to encode video sequences with a same type of content (for instance, for a TV program that features sports, the encoding neural networks of a group are adapted to process sport contents). In some implementations, the encoding neural networks of a given group are adapted to encode a certain "variety of content". For instance, for a group of encoding neural networks adapted to process sport content, some encoding neural networks are adapted to process fast sport actions, and others are adapted to process content with slow movement, such as when the television presenter is shown.

The module MOD_DET for determining neural networks is then configured to:
- analyze the content of the current image IMG (or of a plurality of images of the current sequence, including the current image IMG), for example, to identify the type of content concerned (e.g., sport, computer-generated image, film, video-conference, etc.),
- select a group of neural networks as a function of the result of this analysis, for example as a function of the type of content identified;
- and then select an encoding neural network of the selected group. In particular implementations, the selected encoding neural network EN is the encoding neural network EN of the group that allows obtaining the best performance in term of compression or quality.

In a variant, the module MOD_DET for determining neural networks can determine an encoding neural network EN as a result of a machine learning-based method. Such a machine learning-based method comprises, for example, the following steps:
- inputting the current image (or the plurality of images of the current sequence, including the current image IMG) to a neural network trained to analyze the content of the current image IMG (or of a plurality of images of the current sequence, including the current image IMG), so as to determine a group of encoding neural networks among a plurality of groups of encoding neural networks, adapted to encode the type of content of the current image (or of the plurality of images of the current sequence).
- selecting an encoding neural network of the selected group. In particular implementations, the selected encoding neural network EN is the encoding neural network EN of the group that allows obtaining the best performance in term of compression. In particular implementations, this selection is implemented by a neural network trained to select an encoding neural network of the group, according to a predetermined criteria.

The encoding method then comprises a step S13 of generating a set of parameters related to the current sequence.

In particular implementations, the set of parameters comprises data AF for signaling whether the bitstream should be decoded by a decoding device adapted to obtain a decoded neural network from at least one group of compressed neural networks. This data AF can take the form of a flag AF signaling the possibility (or impossibility) of using a decoding device adapted to obtain a decoded neural network from at least one group of compressed neural networks. In that case, the encoding device (here the processing sequence module MOD_SEQ) can set the flag AF to "1" when a decoding device according to the invention should be used, and "0" otherwise.

In particular implementations, the set of parameters further comprises data BT signaling predetermined characteristics of a group of compressed neural networks adapted to decode the bitstream or required characteristics of the decoder. This data BT may be indicative of:
- a type of group comprising decoding neural networks adapted to a specific type of content, such as sport, synthetic images, medical images, ...
- a type of group characterized by a maximal level of incremental decoding of its neural decoders. For instance, the data BT indicates that at most two decoding neural networks need to be decompressed before a given requested decoding neural network identified by the flag I (described hereafter) can be decompressed;
- a type of group characterized by the fact that a certain decoding method is required to decompress the compressed decoding neural networks (for instance, NNR decoding, or ONNX decoding, according to those respective formats);
- a type of group characterized by the fact that all decoding neural networks of the group can be decoded independently from one another; and/or
- a type of group characterized by the fact that decoding at least one of the neural decoders may require a neural network that is not in the group.

In particular implementations, the required decoding neural network belong to several group, and the data BT is indicative of a plurality of criteria. For example, the required decoding neural network should be independently decoded and belong to a group of decoding neural networks adapted to process medical images.

In particular implementations, the set of parameters further comprises data BI representative of a group of decoding neural networks to use for decoding the current sequence. This data may correspond to an identifier of a group of decoding neural networks identified by the module MOD_DET at step S12.

In particular implementations, this set of parameters comprise data I for identifying a decoding neural network DN among a predetermined set of decoding neural networks, such as an identifier of a decoding neural network DN. In a preferred implementation, the data I identifies the decoding neural network among the group of decoding neural networks identified by the data BI. In that case, to identify a single decoding neural network, both the data BI representative of a group of decoding neural networks to use and the data I are necessary.

In particular implementations, the set of parameters further comprises data ERF for signaling the presence or absence, in the bitstream, of additional refinement data that can be used for obtaining a decoding neural network. In an example, the signaling data ERF takes the form of a flag, and the encoding device (here the processing sequence module MOD_SEQ) can set the flag ERF to "1" when the bitstream comprises additional refinement data, and "0" when the bitstream does not comprise additional refinement data associated to a decoding neural network that should be used to decode the current sequence. The presence or absence of such refinement data is determined at step S12 by the module MOD_DET for determining neural networks.

This additional refinement data can be representative of additional layers of the decoding neural network (identified in the bitstream by the data I for identifying a decoding neural network DN) that should be inserted into the structure of the identified decoding neural network. In an example, this additional refinement data describe, for each additional layer, the structure of the concerned additional layer, weights of the neurons forming the concerned additional layer and/or data for locating where these additional layers should be inserted within the structure of the decoding neural network.

The set of parameters can further comprise data representing the images format of the current sequence, and/or data representing the maximal size of images of the current sequence, and/or data representing the minimal size of blocks of images the current sequence.

The set of parameters is inserted in the bitstream B to transmit (here by the module MOD_BT for generating a bitstream), for example in the header of the portion of the bitstream associated to the current video sequence.

The encoding method further comprises a step S14 of encoding the current image IMG with the current encoding neural network, which generates in output a data unit DU associated to the current image IMG. This data unit DU can be inserted in the bitstream B (here by the module MOD_BT for generating a bitstream).

The encoding device 10 then selects the next image of the time series as the new current image (step S15), and loops to step S11.

**Figure 7** depicts, for illustrative purposes, a bitstream generated by the method for encoding media data of Figure 6.

This bitstream B comprises:
- for each video sequence, a header associated to the concerned video sequence that comprises a set of parameters related to the concerned video sequence.
- for each image of the concerned video sequence, a data unit DU (comprising encoded data) relative to the concerned image.

In an example and as illustrated by Figure 7, the set of parameters of that bitstream B comprises data AF for signaling whether the bitstream should be decoded by a decoding device adapted to obtain a decoded neural network from at least one group of compressed neural networks. This data AF can take the form of a flag AF signaling the possibility (or impossibility) of using a decoding device adapted to obtain a decoded neural network from at least one group of compressed neural networks. In that case, the flag AF may be to "1" when a decoding device according to the invention can be used, and to "0" otherwise.

The set of parameters further comprises data BT signaling predetermined characteristics of a group of compressed neural networks adapted to decode the bitstream. This data BT may be indicative of:
- a type of group comprising decoding neural networks adapted to a specific type of content, such as sport, synthetic images, medical images, ...
- a type of group characterized by a maximal level of incremental decoding of its neural decoders. For instance, the data BT indicates that at most two decoding neural networks need to be decompressed before a given requested decoding neural network identified by the flag I (described hereafter) can be decompressed;
- a type of group characterized by the fact that a certain decoding method is required to decompress the compressed decoding neural networks (for instance, NNR decoding, or ONNX decoding, according to those respective formats);
- a type of group characterized by the fact that all decoding neural networks of the group can be decoded independently from one another; and/or
- a type of group characterized by the fact that decoding at least one of the neural decoders may require a neural network that is not in the group.

In that example, the set of parameters of that bitstream B further comprises data BI representative of a group of decoding neural networks to use for decoding the current sequence. This data may correspond to an identifier of a group of decoding neural networks.

In that example, the set of parameters further comprises data ERF for signaling the presence or absence, in the bitstream, of additional refinement data ERD that can be used for obtaining a decoding neural network. The signaling data ERF can take the form of a flag, and in that case, the flag ERF may be set to "1" when the bitstream comprises additional refinement data ERD, and to "0" when the bitstream does not comprise additional refinement data ERD associated to a decoding neural network that should be used to decode the current sequence.

As already indicated above, this additional refinement data ERD can be representative of additional layers of the decoding neural network (identified in the bitstream by the data I for identifying a decoding neural network DN) that should be inserted into the structure of the identified decoding neural network. In an example, this additional refinement ERD data describe, for each additional layer, the structure of the concerned additional layer, weights of the neurons forming the concerned additional layer and/or data for locating where these additional layers should be inserted within the structure of the decoding neural network.

**Figure 8** illustrates a particular implementation of a decoding device according to the invention.

The decoding device 20 comprises a module MOD_AN for analyzing a bitstream, a module MOD_GEN for generating a decoded version of a decoding neural network, a module MOD_DEC for decoding the bitstream, and a module MOD_SYN for analyzing syntax elements that may be a sub-module of the module MOD_AN for analyzing the bitstream.

In an example, the decoding device receives in input a bitstream, here the bitstream B generated by the encoding device 10. The bitstream B comprises several portions, each portion corresponding to an video sequence. Thus, each portion comprises a plurality of data units DU respectively associated to the different images of the video sequence.

The module MOD_AN for analyzing the bitstream is configured to analyze the bitstream so as to identify, in that bitstream B, different data such as those illustrated by Figure 7. In practice, the module MOD_AN for analyzing the bitstream may be configured for implementing an entropic decoding method of the bitstream B to obtain that data.

As illustrated by Figure 8, the module MOD_AN for analyzing a bitstream comprises a module MOD_SYN for analyzing syntax elements. More precisely, this module MOD_SYN is configured for detecting data I for identifying a decoding neural network DN among a predetermined set of decoding neural networks. As already described above, this data can take the form of an identifier of a decoding neural network DN.

As indicated above, the decoding device has access to a plurality of decoding neural networks, which are organized into "groups" of neural networks. Decoding neural networks of a given group are particularly adapted to process video sequences with a given type of content. In other words, when they process video data with a given type of content, the decoding neural networks of a given group get a performance in term of compression superior to a predetermined threshold, for example according to a rate-distortion optimization criteria, or according to a value representing the quality of a representation decoded by these decoding neural networks.

Thus, in particular implementations, this module MOD_SYN is also configured for detecting data BI representative of a group of decoding neural networks to use for decoding the current video sequence. This data may correspond to an identifier of a group of decoding neural networks.

In particular implementations, this module MOD_SYN is also configured for detecting data AF for signaling whether the bitstream should be decoded by a decoding device according to the invention or not. As indicated above, this data AF can take the form of a flag AF signaling the possibility (or impossibility) of using such a decoding device. In an example, if the value of the flag AF equals "1", the module MOD_AN for analyzing the bitstream determines that this decoding device 20 may be adapted to decode data associated to that video sequence.

In particular implementations, this module MOD_SYN is also configured for detecting data BT signaling predetermined characteristics of a group of compressed neural networks adapted to decode the bitstream. As already indicated above, this data BT may be indicative of:
- a type of group comprising decoding neural networks adapted to a specific type of content, such as sport, synthetic images, medical images, ...
- a type of group characterized by a maximal level of incremental decoding of its neural decoders. For instance, the data BT indicates that at most two decoding neural networks need to be decompressed before a given requested decoding neural network identified by the flag I (described hereafter) can be decompressed;
- a type of group characterized by the fact that a certain decoding method is required to decompress the compressed decoding neural networks (for instance, NNR decoding, or ONNX decoding, according to those respective formats);
- a type of group characterized by the fact that all decoding neural networks of the group can be decoded independently from one another;
- a type of group characterized by the fact that decoding at least one of the neural decoders may require a neural network that is not in the group.

This data BT is then analyzed by the module MOD_AN, that can determine whether this decoding device 20 may be adapted or not for decoding that video sequence.

In particular implementations, this module MOD_SYN is also configured for extracting, from the bitstream, data ERF signaling the presence or absence, in that bitstream, of additional refinement data that can be used for obtaining a decoding neural network. The signaling data ERF can take the form of a flag. In an example, if the flag ERF is set to "1", the decoding device 20 (here, the module MOD_AN for analyzing the bitstream) determines that the bitstream comprises refinement data that can be used for obtaining a decoding neural network, and extracts that refinement data. On the contrary, if the flag ERF is set to "0", the decoding device 20 (here, the module MOD_AN for analyzing the bitstream) determines that the bitstream does not comprise refinement data, and that no further extraction of refinement data is necessary.

The module MOD_AN for analyzing a bitstream is further configured to identify data units within the bitstream B, and to transmit each data unit DU to the decoding module MOD_DN, as described hereafter.

The decoding device 20 also comprises a module MOD_GEN for generating a decoded version of a decoding neural network.

Since the decoding device 20 has access to a plurality of compressed decoding neural networks which are organized into "groups", the module MOD_GEN is configured to identify a particular decoding neural network among the plurality, e.g., from the data I for identifying a decoding neural network DN. As already described above, this data can take the form of an identifier of a decoding neural network DN. Since these decoding neural networks are compressed, the module MOD_GEN for generating a decoded version of a decoding neural network is configured to decode a compressed decoding neural network.

More precisely, according to implementations, a compressed decoding neural network can be independently decoded, i.e., without requiring data related to a decoding neural network different from the one identified by the data I for identifying a decoding neural network. In a variant, a compressed decoding neural network may be decoded in reference to at least one reference neural network. As indicated above, this information ("metadata") related to the manner the compressed decoding neural network may be decoded are for example stored within the non-volatile memory 4 of the decoding device 20, or available to the decoding device by downloading.

Thus, the module MOD_GEN for generating a decoded version of a decoding neural network is configured to access that information to determine whether the compressed decoding neural network should be independently decoded, or rather decoded in reference to at least one reference neural network.

In particular implementations, when the compressed decoding neural network should be independently decoded, the module MOD_GEN for generating a decoded version of a decoding neural network is configured to apply, on the compressed decoding neural network, a neural network decoder compliant with the Neural network Compression and Representation Standard.

In particular implementations, when the compressed decoding neural network should be decoded in reference to a reference neural network, the MOD_GEN for generating a decoded version of a decoding neural network is configured to:
- obtain data for identifying a reference decoding neural network, from an analysis of the information associated to the decoding neural network identified by the data I for identifying a decoding neural network;
- obtain a compressed version of the reference decoding neural network;
- apply a neural network decoder on the reference decoding neural network to obtain a decoded version of the reference decoding neural network;
- apply an incremental neural network decoder taking the decoded version of the reference neural network and decoding differential data associated to the compressed neural network as inputs, so as to obtain a decoded version of the decoding neural network.

As already indicated, the decoding neural network DN and the reference decoding neural network can have the same structure, and the decoding differential data can comprise data representative of differences between each weight of the decoding neural network DN, and the corresponding weight of the reference decoding neural network.

In case several levels of incremental decoding are required to obtain a decoded version of the decoding neural network, these steps are re-iterated for each level.

As indicated above, in particular implementations, the additional refinement data can be representative of additional layers of the decoding neural network (identified in the bitstream by the data I for identifying a decoding neural network DN) that should be inserted into the structure of the identified decoding neural network. Thus, when the data ERF signals the presence, in the bitstream, of additional refinement data that can be used for obtaining a decoding neural network, the MOD_GEN for generating a decoded version of a decoding neural network is configured to :
- obtain a decoded version of a compressed decoding neural network identified with the data I for identifying neural network; and,
- insert additional layers into the structure of the decoded version of the decoding neural network at a location determined from the additional refinement data.

The module MOD_GEN for generating a decoded version of a decoding neural network is further configured for configuring the decoding module MOD_DN so that this decoding module MOD_DN can decode the current data unit DU, and eventually at least another data unit DU associated to the current video sequence.

**Figure 9** illustrates an example of the hardware architecture of a decoding device according to the invention.

To this end, the decoding device 20 has the hardware architecture of a computer. As shown in Figure 9, the decoding device 20 comprises a processor 1. Although illustrated as a single processor 1, two or more processors can be used according to particular needs, desires, or particular implementations of the decoding device 20. Generally, the processor 1 executes instructions and manipulates data to perform the operations of the decoding device 20 and any algorithms, methods, functions, processes, flows, and procedures as described in the present disclosure.

The decoding device 20 also comprises communication means 5. Although illustrated as a single communication means 5 in Figure 9, two or more communication means can be used according to particular needs, desires, or particular implementations of the decoding device 20. The communication means are used by the decoding device 20 for communicating with another electronic device (e.g., an encoding device such as the encoding device 10 illustrated by Figure 1). Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated decoding device.

The decoding device 20 also comprises a random access memory 2, a read-only memory 3, and a non-volatile memory 4. The read-only memory 3 of the device constitutes a recording medium conforming to the invention, which is readable by processor 1 and on which is recorded a computer program PROG_DEC conforming to the invention, containing instructions for carrying out the steps of a method for decoding a bitstream according to the invention.

The program PROG_DEC defines functional modules of the device, which are based on or control the aforementioned elements 1 to 5 of the decoding device 20, and which comprise in particular:
- the module MOD_AN for analyzing the bitstream;
- the module MOD_GEN for generating a decoded version of a decoding neural network;
- the module MOD_DEC for decoding the bitstream; and,
- the module MOD_SYN for analyzing syntax elements.

**Figure 10** is a flowchart of steps of a method for decoding a bitstream, implemented by the decoding device 20.

The decoding device 20 receives in input a bitstream B generated by the method for encoding media data of Figure 6, and illustrated by Figure 7.

As shown on Figure 10, the method for decoding a bitstream comprises a first step S20 during which the decoding device receives a bitstream.

The method for decoding media data then comprises a step S21 in which the decoding device 20 (here the module MOD_AN for analyzing a bitstream) determines whether a header related to an video sequence is present in the received bitstream B. In practice, this determination may correspond to the detection, in the bitstream, of data specific to a header of an video sequence.

If so, the method for decoding media data then comprises a step S22 in which the decoding device 20 (here the module MOD_SYN for analyzing syntax elements) extracts, from the header determined at step S21, a set of parameters related to the current sequence.

The portion of the bitstream associated to the current video sequence comprises the set of parameters associated to the current sequence, and further data (e.g., the data units related to the images of the current video sequence) which is obtained, until a new header related to a new video sequence is detected.

In particular implementations, this set of parameters comprises data AF for signaling whether the bitstream should be decoded by a decoding device according to the invention. This data AF can take the form of a flag AF signaling the possibility (or impossibility) of using a decoding device adapted to obtain a decoded neural network from at least one group of compressed neural networks. In that case, the method for decoding a bitstream comprises a step S21 in which the decoding device 20 (here the module MOD_SYN for analyzing syntax elements) obtains the flag AF. At step S23, if a decoding device according to the invention should be used (e.g., if the flag AF is set to "1"), the decoding methods goes to step S24. Otherwise, if another decoding device should be used, the decoding method goes to step S35. At step S35, the current video sequence is skipped. In a variant, a preconfigured decoder is used.

In particular implementations, this set of parameters comprises data BT signaling predetermined characteristics of a group of compressed neural networks adapted to decode the bitstream. As indicated above, this data BT may be indicative of:
- a type of group comprising decoding neural networks adapted to a specific type of content, such as sport, synthetic images, medical images, ...
- a type of group characterized by a maximal level of incremental decoding of its neural decoders. For instance, the data BT indicates that at most two decoding neural networks need to be decompressed before a given requested decoding neural network identified by the flag I (described hereafter) can be decompressed;
- a type of group characterized by the fact that a certain decoding method is required to decompress the compressed decoding neural networks (for instance, NNR decoding, or ONNX decoding, according to those respective formats);
- a type of group characterized by the fact that all decoding neural networks of the group can be decoded independently from one another; and/or,
- a type of group characterized by the fact that decoding at least one of the neural decoders may require to access a neural network that is not in the group.

In that case, the method for decoding a bitstream comprises a step S24 in which the decoding device 20 (here the module MOD_SYN for analyzing syntax elements) obtains the data BT signaling predetermined characteristics of a group of compressed neural networks.

At step S25, the decoding device 20 (here the module MOD_AN for analyzing the bitstream) determine whether at least one group of decoding neural networks available to this decoding device 20 follows the requirements defined by the data BT data BT signaling predetermined characteristics of a group of compressed neural networks.

If so, the decoding method goes to step S26. Otherwise, if no group can be accessed that follows the requirements defined based on the data BT, the decoding method goes to step S35.

In particular implementations, this set of parameters further comprises data BI representative of a group of decoding neural networks to use for decoding the current sequence. This data BI may correspond to an identifier of a group of decoding neural networks.

In that case, the method for decoding a bitstream comprises a step S26 in which the decoding device 20 (here the module MOD_SYN for analyzing syntax elements) obtains the data BI representative of a group of decoding neural networks to use.

At step S27, the decoding device 20 (here the module MOD_AN for analyzing the bitstream) determine whether a group of decoding neural networks can be accessed that is identified with that group identifier. If so, the decoding method goes to step S28. Otherwise, the decoding method goes to step S35.

In particular implementations, this set of parameters further comprises data I for identifying a decoding neural network DN among a predetermined set of decoding neural networks, such as an identifier of a decoding neural network DN.

In that case, the method for decoding a bitstream comprises a step S28 in which the decoding device 20 (here the module MOD_SYN for analyzing syntax elements) obtains the identifier of the decoding neural network.

At step S29, the decoding device 20 (here the module MOD_AN for analyzing the bitstream) determine whether a decoding neural network can be accessed that gets that ID. If so, the decoding method goes to step S30. Otherwise, if no decoding neural network can be accessed that gets that ID, the decoding method goes to step S35.

In particular implementations, the set of parameters further comprises data ERF for signaling the presence or absence, in the bitstream, of additional refinement data ERD that can be used for obtaining a decoding neural network. In an example, the signaling data ERF takes the form of a flag, and the decoding method thus comprises a step S30 in which the decoding device 20 (here the module MOD_SYN for analyzing syntax elements) obtains the flag ERF.

At step S31, if the bitstream comprises additional refinement data ERD associated to a decoding neural network to use for decoding the current sequence (e.g., if the flag ERF is set to "1"), the decoding method goes to step S32. At step S32, this additional refinement data ERD is extracted from the bitstream. As already explained, this additional refinement data ERD can be representative of additional layers of the decoding neural network (identified in the bitstream by the data I for identifying a decoding neural network DN) that should be inserted into the structure of the identified decoding neural network. In an example, this additional refinement data describe, for each additional layer, the structure of the concerned additional layer, weights of the neurons forming the concerned additional layer and/or data for locating where these additional layers should be inserted within the structure of the decoding neural network.

Otherwise, if the bitstream does not comprise additional refinement data associated to a decoding neural network to use for decoding the current sequence (e.g., if the flag ERF is set to "0"), the decoding method goes to step S33.

At step 33, the decoding device 20 (here the module MOD_GEN for generating a decoded version of a decoding neural network) generates a decoded version of a decoding neural network, from the data extracted by the module MOD_AN for analyzing a bitstream and by the module MOD_SYN for analyzing syntax elements.

As already detailed, the decoding device has access to a plurality of compressed decoding neural networks which are organized into "groups". Thus, the module MOD_GEN can identify a particular decoding neural network, in particular from the data I obtained at step S28.

Since these decoding neural networks are compressed, the module MOD_GEN for generating a decoded version of a decoding neural network is configured to decode a compressed decoding neural network identified by that data I.

More precisely, according to particular implementations, a compressed decoding neural network can be independently decoded, i.e., without requiring data related to a decoding neural network different from the one identified by the data I for identifying a decoding neural network. In a variant, a compressed decoding neural network may be decoded in reference to at least one reference neural network. As indicated above, this information related to the manner the compressed decoding neural network may be decoded are for example stored within the non-volatile memory 4 of the decoding device 20, or available to the decoding device by downloading.

Thus, at step S33, the decoding device (here the module MOD_GEN for generating a decoded version of a decoding neural network) accesses that information to determine whether the compressed decoding neural network should be independently decoded, or decoded in reference to at least one reference neural network.

In particular implementations, when the compressed decoding neural network should be independently decoded, a neural network decoder compliant with the Neural network Compression and Representation Standard is applied, by the module MOD_GEN for generating a decoded version of a decoding neural network, on the compressed decoding neural network.

In particular implementations, when the compressed decoding neural network should be decoded in reference to a reference neural network, the step S33 comprises the following sub-steps, implemented by the module MOD_GEN for generating a decoded version of a decoding neural network:
- obtaining data for identifying a reference decoding neural network, from an analysis of the information associated to the decoding neural network identified by the data I for identifying a decoding neural network;
- obtaining a compressed version of the reference decoding neural network;
- applying a neural network decoder on the reference decoding neural network to obtain a decoded version of the reference decoding neural network; and,
- applying an incremental neural network decoder taking the decoded version of the reference neural network and decoding differential data associated to the compressed neural network as inputs, so as to obtain a decoded version of the decoding neural network.

In case several levels of incremental coding are required to obtain a decoded version of the decoding neural network, these sub-steps are re-iterated for each level.

Furthermore, if additional refinement data ERD has been extracted from the bitstream at step S32, the step S33 comprises the following sub-steps:
- obtaining a decoded version of a compressed decoding neural network identified by the data I for identifying a neural network; and,
- inserting additional layers into the structure of the decoded version of the decoding neural network at a location determined based on the additional refinement data.

The method for decoding a bitstream then comprises a step S34 in which the decoding device 20 (here the decoding module MOD_DN) extracts, from the bitstream, the data units DU associated to each image of the current video sequence, and the decoding module MOD_DN decodes that data unit DUs, by means of the current decoding neural network generated at step S33, so as to obtain 2D representations IMG' of the images of the sequence.

Up until now, the invention has been described in the case where a portion of the bitstream is associated to a current video sequence, and comprises a set of parameters which is associated to that current sequence.

In a variant, that portion of bitstream rather comprises a set of parameters which is associated to a next video sequence following the current video sequence. In that particular case, the bitstream comprises data (I) for identifying a compressed neural network to use for decoding the next video sequence. This allows informing beforehand the decoding device, so that this decoding device can initiate generation of a neural network decoder to be used for decoding the next video sequence upon receiving that set of parameters, and without waiting for reception of that next video sequence.

In a variant, that portion of bitstream comprises the set of parameters which is associated to the current video sequence, but also a set of parameters associated to a next video sequence following the current video sequence. In that particular case, the bitstream comprises data (I) for identifying a compressed neural network to use for decoding the current video sequence, and data (I) for identifying a compressed neural network to use for decoding the next video sequence.

Up until now, the invention has been described in the case where a group of neural networks characterizes a set of neural networks adapted to process images of a given type of content, i.e., these coding neural networks process (i.e., encode and/or decode) video data of a given type of content so they get a performance in term of compression superior to a predetermined threshold. However, the invention also applies to a group characterizing a set of neural networks adapted to encode images in a certain manner, e.g., according to a predetermined format, according to a type of sampling and subsampling, or using a certain method of encoding.

## Claims

1. A method for decoding a bitstream (B) comprising, at a decoding device (20):
- obtaining (S33) a decoded neural network from at least one group of a plurality of compressed neural networks, the compressed neural networks of the at least one group being available to the decoding device; and,
- decoding (S34) the bitstream with the obtained neural network.

2. The decoding method of Claim 1, wherein the compressed neural networks of the at least one group are adapted to decode media data bitstreams with a same type of content.

3. The decoding method according to Claim 1 or 2, wherein obtaining a decoded neural network comprises decoding a compressed neural network of the at least one group, wherein the compressed neural network is decodable in reference to a reference neural network.

4. The decoding method according to Claim 3, wherein the reference neural network belongs to the at least one group.

5. The decoding method according to Claim 3, wherein the reference neural network does not belong to the at least one group.

6. The decoding method according to Claim 1 or 2, wherein obtaining a decoded neural network comprises decoding a compressed neural network by applying, on the compressed network, a neural network decoder compliant with the Neural Network Compression and Representation Standard.

7. The decoding method according to one of Claims 1 to 6, wherein the bitstream (B) comprises data (AF) for signaling whether the bitstream should be decoded by a decoding device adapted to obtain a decoded neural network from at least one group of compressed neural networks.

8. The decoding method according to one of Claims 1 to 7, wherein the bitstream (B) comprises data (BT) signaling predetermined characteristics of a group of compressed neural networks adapted to decode the bitstream.

9. The decoding method according to one of Claims 1 to 8, wherein the bitstream (B) comprises data (BI) for identifying the at least one group of compressed neural networks.

10. The decoding method according to one of Claims 1 to 9, wherein the bitstream (B) comprises coded video sequences, wherein the bitstream (B) comprises data (I) for identifying a compressed neural network to use for decoding a current video sequence, among the compressed neural networks of the at the least one group.

11. The decoding method according to Claim 10, wherein the bitstream (B) further comprises data (I) for identifying a compressed neural network to use for decoding a next video sequence following the current video sequence, among the compressed neural networks of the at the least one group.

12. The decoding method according to one of Claims 1 to 11, wherein the bitstream (B) comprises data (ERF) for signaling that the bitstream further comprises refinement data (ERC) that can be used for obtaining the decoded neural network.

13. The decoding method according to Claim 12, further comprising determining (S29) whether a neural network adapted to decode the current sequence of the bitstream can be obtained or not by the decoding device, based on the data (I) for identifying a compressed neural network to use for decoding the current video sequence.

14. A decoding device (20) comprising at least one processor (1) and a memory (3) having stored thereon a program (PROG_DEC) for implementing the method for decoding a bitstream according to one of Claims 1 to 13.

15. A computer program (PROG_DEC) which on execution by a decoding device (20) causes the decoding device to execute the method for decoding a bitstream according to one of Claims 1 to 13.

16. A bitstream (B) comprising at least one of:
- data (AF) for signaling whether the bitstream should be decoded by a decoding device adapted to obtain a decoded neural network from at least one group of compressed neural networks;
- data (BT) signaling predetermined characteristics of a group of compressed neural networks adapted to decode the bitstream;
- data (BI) for identifying at least one group of compressed neural networks; and,
- data (I) for identifying a compressed neural network to use for decoding the current video sequence, among the compressed neural networks of the at the least one group.

17. A method for decoding a bitstream comprising, at a decoding device:
- obtaining (S26) data related to at least one group of a plurality of neural networks;
- obtaining (S33) a decoded neural network from the obtained data, the neural networks of the at least one group being available to the decoding device; and,
- decoding (S34) the bitstream with the obtained neural network.

18. The decoding method of claim 17 wherein the bitstream (B) comprises data (BI) for identifying the at least one group of neural networks.
